(19) Europäisches Patentamt
European Patent Office
Office européen des brevets

(11) **EP 3 553 983 B1**

(12) **EUROPEAN PATENT SPECIFICATION**

(45) Date of publication and mention
of the grant of the patent:
**11.11.2020 Bulletin 2020/46**

(51) Int Cl.:
*H04L 1/00* *(2006.01)*          *H04L 1/16* *(2006.01)*
*H04L 1/18* *(2006.01)*          *H04L 5/00* *(2006.01)*

(21) Application number: **18744725.5**

(22) Date of filing: **18.01.2018**

(86) International application number:
**PCT/CN2018/073269**

(87) International publication number:
**WO 2018/137553 (02.08.2018 Gazette 2018/31)**

(54) **TRANSMISSION MODE SWITCHING METHOD AND DEVICE**

VERFAHREN UND VORRICHTUNG ZUR KOMMUNIKATIONSMODUSUMSCHALTUNG

PROCÉDÉ ET DISPOSITIF DE COMMUTATION DE MODE DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2017 CN 201710061661**

(43) Date of publication of application:
**16.10.2019 Bulletin 2019/42**

(73) Proprietor: **Huawei Technologies Co., Ltd.**
**Longgang District**
**Shenzhen, Guangdong 518129 (CN)**

(72) Inventors:
• **YANG, Yubo**
 **Shenzhen**
 **Guangdong 518129 (CN)**
• **ZHOU, Guohua**
 **Shenzhen**
 **Guangdong 518129 (CN)**
• **ZHAO, Yinan**
 **Shenzhen**
 **Guangdong 518129 (CN)**
• **LIU, Lei**
 **Shenzhen**
 **Guangdong 518129 (CN)**

(74) Representative: **Gill Jennings & Every LLP**
**The Broadgate Tower**
**20 Primrose Street**
**London EC2A 2ES (GB)**

(56) References cited:
**WO-A1-2016/175007      WO-A1-2016/183705**
**CN-A- 102 036 398      CN-A- 102 740 465**

• **SUNGKYUNG KIM ET AL: "Hybrid ARQ Operation for IEEE 802.16m ; C80216m-08_454r1", IEEE DRAFT; C80216M-08_454R1, IEEE-SA, PISCATAWAY, NJ USA, vol. 802.16m, no. r1, 8 May 2008 (2008-05-08), pages 1-10, XP068000835, [retrieved on 2008-05-08]**

**Description**

## TECHNICAL FIELD

This application relates to wireless communications technologies, and in particular, to a transmission mode switching method and apparatus.

## BACKGROUND

Currently, in a long term evolution (Long Term Evolution, LTE) technology, uplink data transmission supports synchronous hybrid automatic repeat request (Hybrid Automatic Retransmission Request, HARQ) transmission, and downlink data transmission supports asynchronous HARQ transmission.

In a process of discussing enhanced voice LTE (Enhanced Voice LTE, eVoLTE) technologies, for eVoLTE coverage enhancement, it is proposed that the uplink data transmission support both the synchronous HARQ transmission and the asynchronous HARQ transmission, but currently no technology can be used to implement switching between the synchronous HARQ transmission and the asynchronous HARQ transmission.

WO 2016/175007 relates to terminal device, base station device, communication method, and integrated circuit.

## SUMMARY

This application provides a transmission mode switching method and apparatus, so as to provide a switching method between different transmission modes.

Various aspects of the present disclosure have been defined in the independent claims. Further technical features of each of these aspects have been defined in the respective dependent claims.

In the transmission mode switching method and apparatus provided in this application, the terminal receives the transmission mode configuration information sent by the base station, listens to the trigger signaling in the preset space, and sets the current uplink transmission mode to the target transmission mode after detecting, through listening, the trigger signaling, so that the terminal can switch between a plurality of transmission modes when uplink data transmission supports the plurality of transmission modes.

The invention is defined by the appended claims. The embodiments not falling within the scope of the claims should be understood as examples suitable for understanding of the invention.

## DESCRIPTION OF DRAWINGS

FIG. 1 is a framework diagram of a communications system;

FIG. 2 is a schematic flowchart of a transmission mode switching method according to an embodiment of this application;

FIG. 3 is a schematic diagram of radio resource allocation in a transmission mode switching method according to an embodiment of this application;

FIG. 4 is a schematic diagram of radio resource allocation in a transmission mode switching method according to another embodiment of this application;

FIG. 5 is a schematic flowchart of a transmission mode switching method according to another embodiment of this application;

FIG. 6 is a schematic structural diagram of a transmission mode switching apparatus according to an embodiment of this application;

FIG. 7 is a schematic structural diagram of a transmission mode switching apparatus according to another embodiment of this application;

FIG. 8 is a schematic structural diagram of a transmission mode switching apparatus according to another embodiment of this application;

FIG. 9 is a schematic structural diagram of a transmission mode switching apparatus according to still another embodiment of this application; and

FIG. 10 is a schematic structural diagram of a transmission mode switching apparatus according to still another embodiment of this application; and

FIG. 11 is a schematic structural diagram of a transmission mode switching apparatus according to still another embodiment of this application; and

FIG. 12 is a schematic structural diagram of a transmission mode switching apparatus according to still another embodiment of this application.

## DESCRIPTION OF EMBODIMENTS

The following describes some terms used in this application, so as to help a person skilled in the art have a better understanding.

A base station, also referred to as a radio access network (Radio Access Network, RAN) device, is a device connecting a terminal to wireless network. The base station may be a base transceiver station (Base Transceiver Station, BTS) in global system for mobile communications (Global System for Mobile communications, GSM) or code division multiple access (Code Division Multiple Access, CDMA); or may be a NodeB (NodeB, NB) in wideband code division multiple access (Wideband Code Division Multiple Access, WCDMA); or may be an evolved NodeB (evolved NodeB, eNB or eNodeB) in long term evolution (Long Term Evolution, LTE), a relay station or an access point, a base station device in a future 5G network, or the like. This is not specifically limited herein.

A terminal may be a wireless terminal or a wired terminal. The wireless terminal may be a device that provides a user with voice and/or other service data connectivity, a handheld device with a radio connection function, or another processing device connected to a wireless modem. The wireless terminal may communicate with one or more core networks through a radio access network (Radio Access Network, RAN). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (Personal Communication Service, PCS) phone, a cordless phone, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), or a user device (User Device or User Equipment). This not limited in the present invention.

"A plurality of" in this application refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

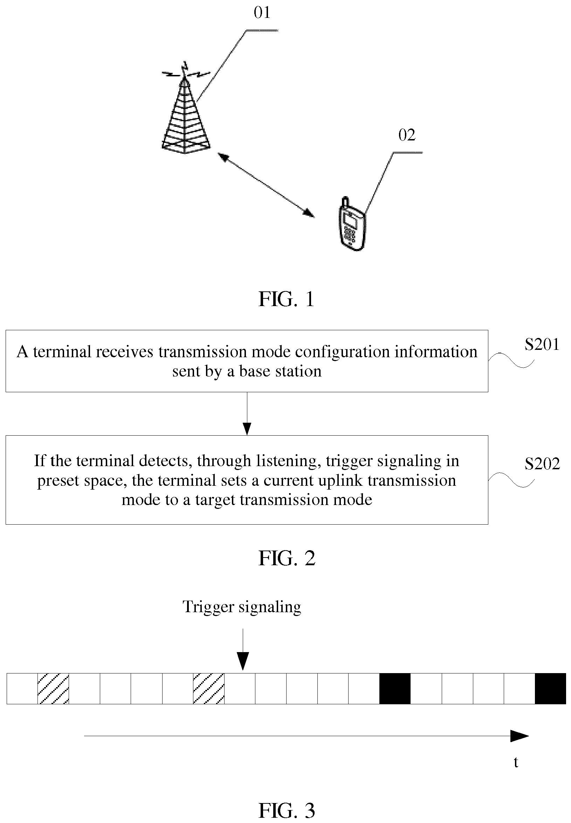

FIG. 1 is a framework diagram of a communications system. As shown in FIG. 1, the communications system includes a base station 01 and a terminal 02.

The communications system may be an LTE communications system, or may be another communications system in the future. This is not limited herein.

In this application, for eVoLTE, it is expected that a case that a plurality of transmission modes can be supported for uplink data transmission may be implemented, for example, an asynchronous HARQ transmission mode, a synchronous HARQ transmission mode, a short transmission time interval (shorten Transmission Time Interval, sTTI) transmission mode, and the like are supported at the same time in the uplink data transmission. The asynchronous HARQ transmission mode may be referred to as a physical uplink shared channel (Physical UL Shared Channel, PUSCH) enhancement mode; and the synchronous HARQ transmission mode may be referred to as a normal (normal) mode.

Further, the asynchronous HARQ transmission mode may mean that retransmission may occur at any time, while the synchronous HARQ transmission mode means that retransmission can only be sent at a fixed time after previous transmission. The sTTI transmission mode means that a length of a TTI is relatively small, and is generally less than a preset threshold.

If both the asynchronous HARQ transmission mode and the synchronous HARQ transmission mode are supported in the uplink transmission, a terminal can switch from a normal mode to a PUSCH enhancement mode when moving from an area with relatively good coverage to an area with relatively weak coverage, and can switch from the PUSCH enhancement mode to the normal mode when moving from the area with relatively weak coverage to the area with relatively good coverage. Certainly, the switching is not limited, and a specific switching method is provided in this application.

FIG. 2 is a schematic flowchart of a transmission mode switching method according to an embodiment of this application. As shown in FIG. 2, the method includes the following steps.

S201. A terminal receives transmission mode configuration information sent by a base station.

The transmission mode configuration information includes a configuration parameter of a target transmission mode.

Optionally, the transmission mode configuration information may be carried in radio resource control (Radio Resource Control, RRC) signaling sent by the base station. This is not limited herein.

To be specific, switching of a transmission mode may be initiated by RRC reconfiguration.

It should be noted that when the target transmission mode is an asynchronous HARQ transmission mode, the asynchronous HARQ transmission mode may be configured at a terminal level, or may be configured at a cell level.

If the asynchronous HARQ transmission mode is configured at the terminal level for a particular terminal and the terminal supports carrier aggregation, RRC parameters of a primary cell (Primary Cell, PCell) and a secondary cell (Secondary Cell, SCell) are the same, that is, the configuration parameters that are of the asynchronous HARQ transmission mode of the PCell and the asynchronous HARQ transmission mode of the SCell and that are carried in the RRC signaling are the same. Optionally, the configuration parameters include: a frequency hopping interval (interval), a frequency hopping offset (offset), and the like. This is not limited herein.

If the asynchronous HARQ transmission mode is configured at the cell level, the PCell and the SCell are configured separately, that is, the parameters in the RRC signaling are configurable. In this configuration mode, one media access control (Media Access Control, MAC) entity (MAC entity) needs to maintain two different HARQ entities (HARQ entities). In RCC signaling, the base station has different configuration parameter sets for asynchronous HARQ transmission mode of the PCell and the asynchronous HARQ transmission mode of the SCell. It should be noted that this cell-level configuration manner includes a special case in which the base station configures only the asynchronous HARQ transmission mode supported by the PCell by using the RRC signaling, that is, the asynchronous HARQ transmission mode supports only the PCell. In other words, the asynchronous HARQ transmission mode does not support the carrier aggregation.

After receiving the configuration parameter of the target transmission mode, the terminal may configure the target transmission mode based on the configuration parameter. After the configuration, the terminal is capable of using the target transmission mode, but may temporarily not switch a transmission mode.

Optionally, the target transmission mode includes an asynchronous HARQ transmission mode, a synchronous HARQ transmission mode, an sTTI transmission mode, and the like. A current transmission mode may also be one of the asynchronous HARQ transmission mode, the synchronous HARQ transmission mode, and the sTTI transmission mode. In other words, the terminal switches among these transmission modes.

For example, if the target transmission mode is the asynchronous HARQ transmission mode, after the terminal configures the asynchronous HARQ transmission mode, it indicates that the terminal may switch from the current transmission mode to the asynchronous HARQ transmission mode.

S202. If the terminal detects, through listening, trigger signaling in preset space, the terminal sets a current uplink transmission mode to a target transmission mode.

After the terminal configures the target transmission mode, the terminal listens to the trigger signaling in the preset space, and switches the transmission mode after receiving the trigger signaling.

Optionally, the terminal performs cyclic redundancy check (Cyclic Redundancy Check, CRC), blindly detects the trigger signaling in the preset space, and switches to the target transmission mode after detecting, through listening, the trigger signaling.

The foregoing preset space may be pre-specified search space, such as terminal-specific search space (UE-specific search space, USS).

In this embodiment, the terminal receives the transmission mode configuration information sent by the base station, listens to the trigger signaling in preset space, and sets the current uplink transmission mode to the target transmission mode after detecting, through listening, the trigger signaling, so that the terminal can switch between a plurality of transmission modes when the uplink data transmission supports the plurality of transmission modes.

Further, the trigger signaling may be downlink control information (Downlink Control Information, DCI).

When the target transmission mode is the asynchronous HARQ transmission mode, the trigger signaling may be the DCI including a HARQ process identifier. That is, when the terminal switches from another transmission mode to the asynchronous HARQ transmission mode, that if the terminal detects, through listening, the trigger signaling in the preset space, the terminal sets the current uplink transmission mode to the target transmission mode may be: if the terminal detects, through listening in the preset space, the DCI that includes the HARQ process identifier, the terminal sets the current uplink transmission mode to the asynchronous HARQ transmission mode.

It should be noted that, for the synchronous HARQ transmission mode, it means that retransmission can be sent only at a fixed time after previous transmission, and also means that only a specific HARQ process (process) can be used in a specific subframe. In other words, for the synchronous HARQ transmission mode, the terminal may directly derive the HARQ process from a subframe number and a timing relationship specified in the protocol, without a need to indicate the HARQ process identifier (HARQ process number); on the contrary, for the asynchronous HARQ transmission mode, the terminal needs to indicate the HARQ process number. Certainly, in this application, both the terminal and the base station may pre-configure the HARQ process identifier synchronously, that is, the terminal and the base station have a same understanding of a same HARQ process identifier, so as to avoid an indication error.

In this embodiment, new DCI, namely, DCI in a format different from an existing format, is provided. The new DCI includes the HARQ process identifier.

Optionally, the new DCI that includes the HARQ process identifier may include a modulation and coding scheme (Modulation and Coding Scheme, MCS) field, a precoding (Precoding information) field, and a HARQ process number field. The HARQ process number field is used to indicate the foregoing HARQ process identifier. The precoding field is used to retain an uplink beamforming capability of the terminal.

Optionally, in the DCI that includes the HARQ process identifier, the MCS field occupies 5 bits (bits), the precoding field occupies 3 bits or 6 bits, and the HARQ process number field occupies 3 bits. Certainly, this is not limited herein.

Compared with the existing DCI, in the DCI that includes the HARQ process identifier, a "DCI subframe repetition number (subframe repetition number) field", a "transmission power control (Transmission Power Control, TPC) field", and the like may be deleted. This is not limited herein.

Optionally, when the foregoing target transmission mode is the sTTI transmission mode, similar to the asynchronous HARQ transmission mode, the terminal listens to, in the preset space, the DCI that includes the HARQ process identifier, and sets the current uplink transmission mode to the sTTI transmission mode after detects, through listening, the DCI that includes the HARQ process identifier. Details are not described herein.

Further, when the target transmission mode is the synchronous HARQ transmission mode, the existing DCI may be used as the trigger signaling.

Optionally, that if the terminal detects, through listening, the trigger signaling in the preset space, the terminal set the current uplink transmission mode to the target transmission mode may be: if the terminal detects, through listening, DCI in a format 0 or DCI in a format 4 in the preset space, the terminal sets the current uplink transmission mode to the synchronous HARQ transmission mode.

That is, if the terminal switches from another transmission mode to the synchronous HARQ transmission mode, the terminal does not need to indicate the HARQ process identifier, and the terminal may use the DCI in the existing format such as the DCI in the format 0 (DCI format 0) or the DCI in the format 4 (DCI format 4).

Specifically, the terminal may listen to only "DCI format 0" in the preset space, and set the current uplink transmission mode to the synchronous HARQ transmission mode after detecting, through listening, "DCI format 0". Alternatively, the terminal may listen to only "DCI format 4" in the preset space, and set the current uplink transmission mode to the synchronous HARQ transmission mode after detecting, through listening, "DCI format 4". Alternatively, the terminal may listen to both "DCI format 0" and "DCI format 4" in the preset space, and set the current uplink transmission mode to the synchronous HARQ transmission mode after detecting, through listening, one of the "DCI format 0" and "DCI format 4". However, this is not limited thereto.

Based on the foregoing embodiment, the switching process may occur in a semi-persistent scheduling (Semi-persistent scheduling, SPS) scenario, unlike a dynamic scheduling scenario in which a radio resource is allocated to a terminal once per TTI, the SPS allows a semi-static configuration of the radio resource and periodically allocates the resource to a specific terminal. In short, at a TTI, the base station specifies the radio resource (which is referred to herein as an SPS resource) used by the terminal by using a physical downlink control channel (Physical Downlink Control Channel, PDCCH) that is scrambled by using an SPS cell radio network temporary identifier (Cell-Radio Network Temporary Identifier, C-RNTI), and the terminal periodically uses the SPS resource to receive or send data, and the base station does not need to re-deliver the PDCCH allocation resource.

In this application, before the terminal receives the transmission mode configuration information sent by the base station, the method further includes the following steps: the terminal receives SPS configuration information sent by the base station, where the SPS configuration information includes a radio resource allocation parameter; and the terminal stores the radio resource allocation parameter.

The radio resource allocation parameter is used to indicate the SPS resource. After storing the radio resource allocation parameter, the terminal may periodically use the SPS resource to receive or send data.

Based on SPS configuration performed by the terminal, the foregoing trigger signaling is trigger signaling scrambled by using the SPS C-RNTI, that is, the trigger signaling may be DCI scrambled by using the SPS C-RNTI.

FIG. 3 is a schematic diagram of radio resource allocation in a transmission mode switching method according to an embodiment of this application.

Optionally, the trigger signaling scrambled by using the SPS C-RNTI may include a new resource allocation parameter. In this implementation, the SPS scenario may continue to operate after the transmission mode is switched.

To be specific, after setting the current uplink transmission mode to the target transmission mode, the terminal updates the stored radio resource allocation parameter to the new resource allocation parameter. That is, the terminal deletes the original radio resource allocation parameter and replaces it with the new resource allocation parameter.

As shown in FIG. 3, an originally allocated radio resource is identified by a square with "shaded twill", and the terminal periodically receives or sends the data by using the allocated radio resource. A resource indicated by the new resource allocation parameter is identified by a "black" square, and after the transmission mode is switched, the terminal periodically receives or sends the data based on the new resource allocation parameter.

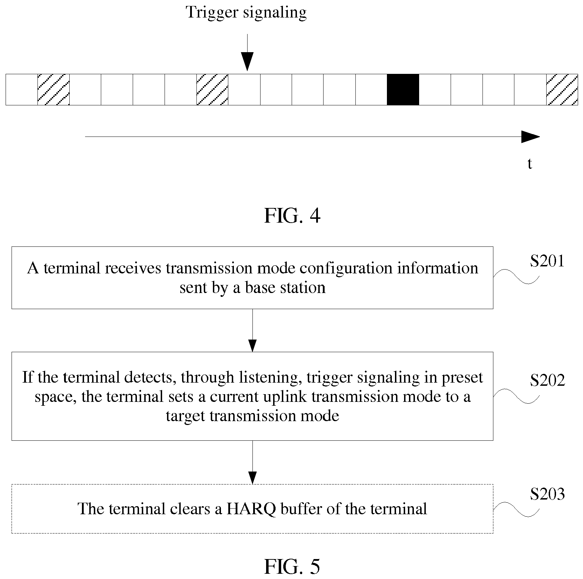

FIG. 4 is a schematic diagram of radio resource allocation in a transmission mode switching method according to another embodiment of this application.

Based on the SPS configuration performed by the terminal, the foregoing trigger signaling is the trigger signaling scrambled by using the C-RNTI, that is, the trigger signaling may be the DCI scrambled by using the C-RNTI.

Optionally, the trigger signaling scrambled by using the C-RNTI may include the new resource allocation parameter.

In this embodiment, after receiving the new resource allocation parameter, the terminal does not delete the previously stored radio resource allocation parameter, but uses the new resource allocation parameter as a temporary resource allocation parameter, and the terminal does not store the new resource allocation parameter. As shown in FIG. 4, an originally allocated radio resource is identified by a square with "shaded twill", and the terminal periodically receives or sends the data by using the allocated radio resource. The terminal transmits, in a most recent next period, the data based on the new resource allocation parameter. To be specific, the terminal receives or sends, in a next period, data by using the resource identified by the "black" square, and in a period following the next period, continues to use the radio resource allocation parameter originally stored by the terminal, that is, continues to use the resource identified by the square with "shaded twill" to receive or send the data.

Optionally, in the SPS configuration, the terminal may alternatively terminate the SPS after the transmission mode is switched. That is, the terminal may release the stored radio resource allocation parameter after setting the current uplink transmission mode to the target transmission mode.

After releasing radio resource allocation parameter, the terminal may receive or send the data in a manner in which the radio resource is dynamically indicated. This is not specifically limited herein.

Optionally, based on the foregoing embodiment, the foregoing trigger signaling scrambled by using the SPS C-RNTI or the trigger signaling scrambled by using the C-RNTI may be the DCI that includes the HARQ process identifier.

The DCI that includes the HARQ process identifier may further include a 2-bit redundancy version (Redundancy Version, RV) field.

A value of the RV field is used to indicate whether the DCI that includes the HARQ process identifier is valid DCI.

Further, the DCI that includes the HARQ process identifier in this application may include content shown in Table 1.

**Table 1**

| Field | Size (bit) |
|---|---|
| Flag format differentiation (Flag format differentiation) | 0 bits/1 bit |
| Frequency hopping flag (Frequency hopping flag) | 1 bit |
| Resource block assignment (Resource block assignment) | $\left\lceil \log_2(N_{\mathrm{RB}}^{\mathrm{UL}}(N_{\mathrm{RB}}^{\mathrm{UL}}+1)/2) \right\rceil$ bits |
| MCS | 5 bits |
| Repetition number (Repetition number) | 3 bits |
| HARQ process number | 3 bits |
| New data indicator (New Data Indicator, NDI) | 1 bit |
| RV | 2 bits |
| Uplink index (UL index) | 2 bits |
| Downlink assignment indicator (Downlink Assignment Indicator, DAI) | 2 bits |
| Channel state information request (Channel State Information request, CSI request) | 1 bit or 2/3 bits |
| Sounding reference signal request (Sounding Reference signal request, SRS request) | 1 bit |
| Precoding information | 3/6 bits |

A size of the resource block assignment field is represented as $\left\lceil \log_2(N_{\mathrm{RB}}^{\mathrm{UL}}(N_{\mathrm{RB}}^{\mathrm{UL}}+1)/2) \right\rceil$ bits, where $N_{\mathrm{RB}}^{\mathrm{UL}}$ represents a quantity of resource blocks within available uplink bandwidth.

Optionally, after the terminal switches the current uplink transmission mode to the asynchronous HARQ transmission mode, the terminal may lose uplink synchronization, that is, the terminal does not know a current system frame number and a current subframe number that are corresponding to the terminal. After the base station knows that the terminal loses uplink synchronization, the base station instructs the terminal to perform non-contention (non-contention) random access again. During random access, the terminal first sends a random access request PRACH (physical random access channel, Physical Random Access Channel) to the base station, the base station returns a random access response (Random Access Response, RAR) to the terminal, and the base station allocates a resource of information 3 (message 3, msg3) sent by the terminal to the terminal by using the RAR. In this case, the terminal is still in a PUSCH enhancement mode. The terminal sends the msg3 over the PUSCH, and the PUSCH repeats the msg3, but the terminal does not know how many times the PUSCH repeats the msg3, and therefore, a quantity of repetitions need to be indicated in the RAR sent by the base station. The terminal indicates, to the base station by using the msg3, that C-RNTI of the terminal is used for conflict resolution during random access.

Herein, the RAR sent by the base station may be DCI that includes the quantity of repetitions, that is, the base station uses the new DCI to indicate the quantity of repetitions to the terminal. Optionally, the new DCI includes the "repetition number (Repetition number) field".

FIG. 5 is a schematic flowchart of a transmission mode switching method according to another embodiment of this application. As shown in FIG. 5, based on FIG. 2, the method may further include the following step after S202.

S203. The terminal clears a HARQ buffer (buffer) of the terminal.

It should be noted that the terminal uses the HARQ buffer to store some pieces of HARQ process information that are not transmitted, such as the HARQ process identifier and the RV.

After detecting, through listening, the trigger signaling in the preset space, the terminal switches to the target transmission mode, and clears the HARQ buffer of the terminal after switching is complete.

During specific implementation, the terminal performs CRC, blindly detects the trigger signaling in the preset space, switches to the target transmission mode after detecting, through listening, the trigger signaling, and clears the HARQ buffer of the terminal after switching is complete.

Optionally, when the terminal switches from the synchronous HARQ transmission mode to the asynchronous HARQ transmission mode, the terminal itself originally maintains a HARQ process group. Assuming that HARQ process numbers in the HARQ process group are 0 to 7, after switching to the asynchronous HARQ transmission mode, the terminal does not need to maintain its own HARQ process group, and only needs to wait for the base station to indicate the process identifier, and then clears the HARQ buffer.

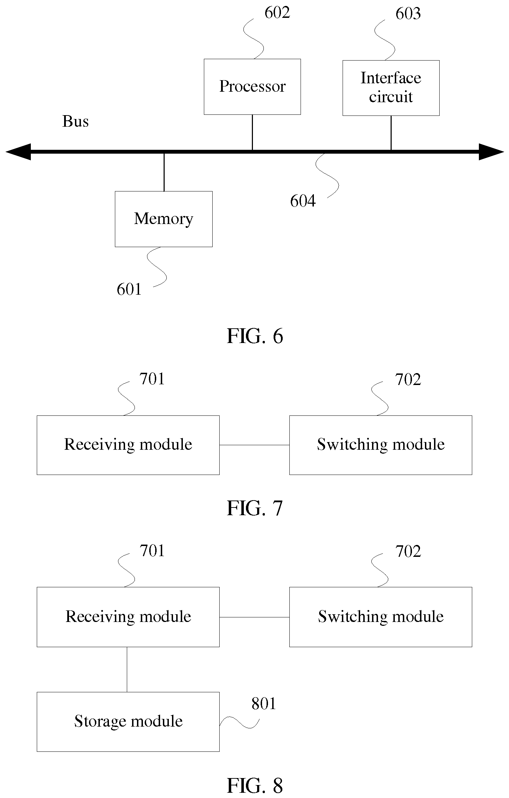

FIG. 6 is a schematic structural diagram of a transmission mode switching apparatus according to an embodiment of this application. As shown in FIG. 6, the apparatus includes a memory 601, a processor 602, an interface circuit 603, and a bus 604.

The memory 601, the processor 602, and the interface circuit 603 are connected to each other and complete mutual communication by using the bus 604. The processor 602 receives or sends information, such as control information and data, by using the interface circuit 603.

The memory 601 stores a set of program code, and the processor 602 invokes the program code stored in the memory 601 to perform the following operations:

receiving transmission mode configuration information sent by a base station, where the transmission mode configuration information includes a configuration parameter of a target transmission mode; and
when detecting, through listening, trigger signaling in preset space, setting a current uplink transmission mode to the target transmission mode.

The target transmission mode includes an asynchronous HARQ transmission mode or a synchronous HARQ transmission mode.

Further, the trigger signaling is downlink control information DCI that includes a HARQ process identifier, and the target transmission mode is the asynchronous HARQ transmission mode.

The processor 602 is specifically configured to: when detecting, through listening in the preset space, the DCI that includes the HARQ process identifier, set the current uplink transmission mode to the asynchronous HARQ transmission mode.

Optionally, the DCI that includes the HARQ process identifier includes a 5-bit modulation and coding scheme MCS field, a 3-bit or 6-bit precoding field, and a 3-bit HARQ process number field.

The HARQ process number field is used to indicate the HARQ process identifier.

Further, the processor 602 is configured to: before receiving the transmission mode configuration information sent by the base station, receive semi-persistent scheduling SPS configuration information sent by the base station, where the SPS configuration information includes a radio resource allocation parameter; and store the radio resource allocation parameter.

Optionally, the DCI that includes the HARQ process identifier includes a 2-bit redundancy version RV field, and a value of the RV field is used to indicate whether the DCI that includes the HARQ process identifier is valid DCI.

In another implementation, the trigger signaling is downlink control information DCI in format 0 or DCI in format 4, and the target transmission mode is the synchronous HARQ transmission mode.

The processor 602 is specifically configured to: when detecting, through listening, the DCI in format 0 or the DCI in format 4 in the preset space, set the current uplink transmission mode to the synchronous HARQ transmission mode.

Optionally, the trigger signaling is trigger signaling scrambled by using an SPS C-RNTI.

The trigger signaling scrambled by using the SPS C-RNTI includes a new resource allocation parameter.

The processor 602 is specifically configured to: after setting the current uplink transmission mode to the target transmission mode, update the stored radio resource allocation parameter to the new resource allocation parameter.

Optionally, the trigger signaling is trigger signaling scrambled by using a C-RNTI.

Optionally, the trigger signaling scrambled by using the C-RNTI includes a new resource allocation parameter.

The processor 602 is configured to: after setting the current uplink transmission mode to the target transmission mode, transmit data based on the new resource allocation parameter during a most recent data transmission.

Optionally, the processor 602 is configured to: after setting the current uplink transmission mode to the target transmission mode, release the stored radio resource allocation parameter.

Optionally, the processor 602 is configured to: after setting the current uplink transmission mode to the target transmission mode, clear a HARQ buffer of the apparatus.

The apparatus is configured to implement the foregoing method embodiment. Implementation principles and technical effects of the apparatus are similar to those of the method embodiment. Details are not described herein again.

FIG. 7 is a schematic structural diagram of a transmission mode switching apparatus according to another embodiment of this application. As shown in FIG. 7, the apparatus includes a receiving module 701 and a switching module 702.

The receiving module 701 is configured to receive transmission mode configuration information sent by a base station, where the transmission mode configuration information includes a configuration parameter of a target transmission mode.

The switching module 702 is configured to: when detecting, through listening, trigger signaling in preset space, set a current uplink transmission mode to the target transmission mode.

In this embodiment, the terminal receives the transmission mode configuration information sent by the base station, listens to the trigger signaling in preset space, and sets the current uplink transmission mode to the target transmission mode after detecting, through listening, the trigger signaling, so that the terminal can switch between a plurality of transmission modes when the uplink data transmission supports the plurality of transmission modes.

The target transmission mode includes an asynchronous HARQ transmission mode or a synchronous HARQ transmission mode.

Optionally, the trigger signaling is downlink control information DCI that includes a HARQ process identifier, and the target transmission mode is the asynchronous HARQ transmission mode.

Correspondingly, the switching module 702 is specifically configured to: when detecting, through listening in the preset space, the DCI that includes the HARQ process identifier, set the current uplink transmission mode to the asynchronous HARQ transmission mode.

The DCI that includes the HARQ process identifier may include a 5-bit modulation and coding scheme MCS field, a 3-bit or 6-bit precoding field, and a 3-bit HARQ process number field.

The HARQ process number field is used to indicate the HARQ process identifier.

FIG. 8 is a schematic structural diagram of a transmission mode switching apparatus according to another embodiment of this application. As shown in FIG. 8, based on FIG. 7, the apparatus may further include a storage module 801.

The receiving module 701 is further configured to: before receiving the transmission mode configuration information sent by the base station, receive semi-persistent scheduling SPS configuration information sent by the base station, where the SPS configuration information includes a radio resource allocation parameter.

The storage module 801 is configured to store the radio resource allocation parameter.

Optionally, the DCI that includes the HARQ process identifier includes a 2-bit RV field, and a value of the RV field is used to indicate whether the DCI that includes the HARQ process identifier is valid DCI.

In another implementation, the trigger signaling is downlink control information DCI in format 0 or DCI in format 4, and the target transmission mode is the synchronous HARQ transmission mode.

The switching module 702 is specifically configured to: when detecting, through listening, the DCI in format 0 or the DCI in format 4 in the preset space, set the current uplink transmission mode to the synchronous HARQ transmission mode.

Optionally, the trigger signaling is trigger signaling scrambled by using an SPS C-RNTI.

The trigger signaling scrambled by using the SPS C-RNTI includes a new resource allocation parameter.

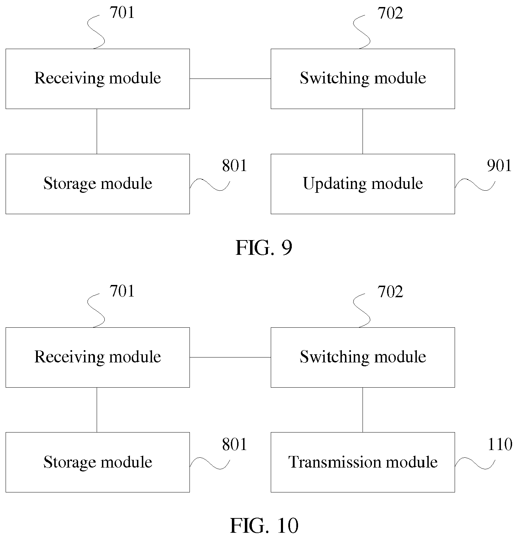

FIG. 9 is a schematic structural diagram of a transmission mode switching apparatus according to still another embodiment of this application. As shown in FIG. 9, based on FIG. 8, the apparatus may further include an updating module 901, configured to: after the switching module 702 sets the current uplink transmission mode to the target transmission mode, update a stored radio resource allocation parameter to the new resource allocation parameter.

Optionally, the trigger signaling is trigger signaling scrambled by using a C-RNTI. The trigger signaling scrambled by using the C-RNTI includes a new resource allocation parameter.

FIG. 10 is a schematic structural diagram of a transmission mode switching apparatus according to still another embodiment of this application. As shown in FIG. 10, based on FIG. 8, the apparatus may further include a transmission module 110, configured to: after the switching module 702 sets the current uplink transmission mode to the target transmission mode, transmit data based on the new resource allocation parameter during a most recent data transmission.

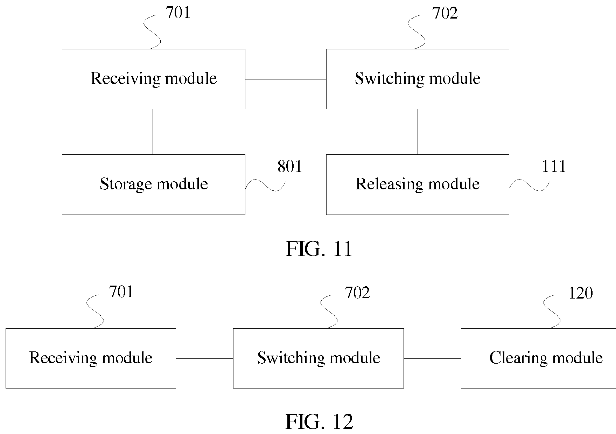

FIG. 11 is a schematic structural diagram of a transmission mode switching apparatus according to still another embodiment of this application. As shown in FIG. 11, based on FIG. 8, the apparatus may further include a releasing module 111, configured to: after the switching module 702 sets the current uplink transmission mode to the target transmission mode, release a stored radio resource allocation parameter.

FIG. 12 is a schematic structural diagram of a transmission mode switching apparatus according to still another embodiment of this application. As shown in FIG. 12, based on FIG. 7, the apparatus may further include a clearing module 120, configured to: after the switching module 702 sets the current uplink transmission mode to the target transmission mode, clear a HARQ buffer of the apparatus.

The operations performed by the modules may be correspondingly performed by the processor in the apparatus; and when communicating with another device, the processor may receive or send a signal by using an interface circuit.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a Solid State Disk (SSD)), or the like.

## Claims

1. A transmission mode switching method, comprising:

   receiving (S201), by a terminal, transmission mode configuration information sent by a base station, wherein the transmission mode configuration information comprises a configuration parameter of a target transmission mode; and
   switching (S202), by the terminal, a current uplink transmission mode to the target transmission mode if the terminal detects, through listening, trigger signaling in preset space;
   wherein the target transmission mode is an asynchronous hybrid automatic repeat request HARQ transmission mode or a synchronous HARQ transmission mode;
   wherein when the target transmission mode is the asynchronous HARQ transmission mode,
   the trigger signaling is downlink control information DCI that comprises a HARQ process identifier, and
   the switching, by the terminal, a current uplink transmission mode to the target transmission mode if the terminal detects, through listening, trigger signaling in preset space comprises:

      if the terminal detects, through listening in the preset space, the DCI that comprises the HARQ process identifier, switching, by the terminal, the current uplink transmission mode to the asynchronous HARQ transmission mode;
      wherein when the target transmission mode is the synchronous HARQ transmission mode,
      the trigger signaling is downlink control information DCI in format 0 or DCI in format 4, and
      the switching, by the terminal, a current uplink transmission mode to the target transmission mode if the terminal detects, through listening, trigger signaling in preset space comprises:

if the terminal detects, through listening, the DCI in format 0 or the DCI in format 4 in the preset space, switching, by the terminal, the current uplink transmission mode to the synchronous HARQ transmission mode.

2. The method according to claim 1, wherein the DCI that comprises the HARQ process identifier comprises a 5-bit modulation and coding scheme MCS field, a 3-bit or 6-bit precoding field, and a 3-bit HARQ process number field; and the HARQ process number field is used to indicate the HARQ process identifier.

3. The method according to claim 1 or 2, wherein before the receiving, by a terminal, transmission mode configuration information sent by a base station, the method further comprises:

   receiving, by the terminal, semi-persistent scheduling SPS configuration information sent by the base station, wherein the SPS configuration information comprises a radio resource allocation parameter; and
   storing, by the terminal, the radio resource allocation parameter.

4. The method according to claim 3, wherein the DCI that comprises the HARQ process identifier comprises a 2-bit redundancy version RV field, and a value of the RV field is used to indicate whether the DCI that comprises the HARQ process identifier is valid DCI.

5. The method according to claim 3, wherein the trigger signaling is trigger signaling scrambled by using an SPS cell radio network temporary identifier C-RNTI.

6. The method according to claim 5, wherein the trigger signaling scrambled by using the SPS C-RNTI comprises a new resource allocation parameter; and
   after the switching, by the terminal, a current uplink transmission mode to the target transmission mode, the method further comprises:
   updating, by the terminal, the stored radio resource allocation parameter to the new resource allocation parameter.

7. The method according to claim 3, wherein the trigger signaling is trigger signaling scrambled by using a C-RNTI.

8. The method according to claim 7, wherein the trigger signaling scrambled by using the C-RNTI comprises a new resource allocation parameter; and
   after the switching, by the terminal, a current uplink transmission mode to the target transmission mode, the method further comprises:
   transmitting, by the terminal, data based on the new resource allocation parameter during a most recent data transmission.

9. The method according to claim 3, wherein after the switching a current uplink transmission mode to the target transmission mode, the method further comprises:
   releasing, by the terminal, the stored radio resource allocation parameter.

10. The method according to any one of claims 1 to 9, wherein after the switching, by the terminal, a current uplink transmission mode to the target transmission mode if the terminal detects, through listening, trigger signaling in preset space, the method further comprises:
    clearing, by the terminal, a HARQ buffer of the terminal.

11. A transmission mode switching apparatus, comprising:

    a receiving module (701), and
    a switching module (702), the apparatus performing the method of any preceding claim.

**Patentansprüche**

1. Übertragungsmodus-Umschaltverfahren, Folgendes umfassend:

   Empfangen (S201), durch ein Endgerät, von Übertragungsmodus-Konfigurationsinformationen, die von einer Basisstation gesendet wurden, wobei die Übertragungsmodus-Konfigurationsinformationen einen Konfigurationsparameter eines Zielübertragungsmodus umfassen; und

Umschalten (S202), durch das Endgerät, eines aktuellen Uplink-Übertragungsmodus in den Zielübertragungsmodus, wenn das Endgerät durch Abhören eine Auslösesignalisierung im voreingestellten Raum erkennt;

wobei der Zielübertragungsmodus ein asynchroner hybrider HARQ-Übertragungsmodus mit automatischer Wiederholungsanforderung oder ein synchroner HARQ-Übertragungsmodus ist;

wobei, wenn der Zielübertragungsmodus der asynchrone HARQ-Übertragungsmodus ist, die Auslösesignalisierung eine Downlink-Steuerinformation DCI ist, die einen HARQ-Prozess-Identifizierer umfasst, und wobei das Umschalten, durch das Endgerät, eines aktuellen Uplink-Übertragungsmodus in den Zielübertragungsmodus, wenn das Endgerät durch Abhören eine Auslösesignalisierung in einem voreingestellten Raum erkennt, Folgendes umfasst:

wenn das Endgerät durch Abhören im voreingestellten Raum die DCI erkennt, die die HARQ-Prozesskennung umfasst, Umschalten, durch das Endgerät, des aktuellen Uplink-Übertragungsmodus in den asynchronen HARQ-Übertragungsmodus;

wobei, wenn der Zielübertragungsmodus der synchrone HARQ-Übertragungsmodus ist, die Auslösesignalisierung die Downlink-Steuerinformation DCI im Format 0 oder DCI im Format 4 ist, und das Umschalten, durch das Endgerät, eines aktuellen Uplink-Übertragungsmodus in den Zielübertragungsmodus, wenn das Endgerät durch Abhören eine Auslösesignalisierung in einem voreingestellten Raum erkennt, Folgendes umfasst:

wenn das Endgerät durch Abhören das DCI im Format 0 oder das DCI im Format 4 im voreingestellten Raum erkennt, Umschalten, durch das Endgerät, des aktuellen Uplink-Übertragungsmodus in den synchronen HARQ-Übertragungsmodus.

2. Verfahren nach Anspruch 1, wobei der DCI, der die HARQ-Prozesskennung umfasst, ein 5-Bit-Modulations- und Codierungsschema-MCS-Feld, ein 3-Bit- oder 6-Bit-Vorcodierungsfeld und ein 3-Bit-HARQ-Prozessnummernfeld umfasst; und

wobei das HARQ-Prozessnummer-Feld zur Angabe der HARQ-Prozesskennung verwendet wird.

3. Verfahren nach Anspruch 1 oder 2, wobei das Verfahren vor dem Empfangen, durch ein Endgerät, von Übertragungsmodus-Konfigurationsinformationen, die von einer Basisstation gesendet wurden, ferner Folgendes umfasst:

Empfangen, durch das Endgerät, von semipersistenten Scheduling-SPS-Konfigurationsinformationen, die von der Basisstation gesendet werden, wobei die SPS-Konfigurationsinformationen einen Funkressourcen-Zuweisungsparameter umfassen; und

Speichern, durch das Endgerät, des Funkressourcen-Zuweisungsparameters.

4. Verfahren nach Anspruch 3, wobei die DCI, die die HARQ-Prozesskennung umfasst, ein 2-Bit-Redundanzversions-RV-Feld umfasst und wobei ein Wert des RV-Felds verwendet wird, um anzuzeigen, ob die DCI, die die HARQ-Prozesskennung umfasst, eine gültige DCI ist.

5. Verfahren nach Anspruch 3, wobei die Auslösesignalisierung eine Auslösesignalisierung ist, die unter Verwendung einer temporären SPS-Mobilfunknetzkennung C-RNTI verschlüsselt ist.

6. Verfahren nach Anspruch 5, wobei die Auslösesignalisierung, die mittels SPS C-RNTI verschlüsselt ist, einen neuen Ressourcen-Zuweisungsparameter umfasst; und

nach dem Umschalten, durch das Endgerät, eines aktuellen Uplink-Übertragungsmodus in den Zielübertragungsmodus das Verfahren ferner Folgendes umfasst:

Aktualisieren, durch das Endgerät, des gespeicherten Funkressourcen-Zuweisungsparameters auf den neuen Ressourcen-Zuweisungsparameter.

7. Verfahren nach Anspruch 3, wobei die Auslösesignalisierung eine Auslösesignalisierung ist, die mittels C-RNTI verschlüsselt ist.

8. Verfahren nach Anspruch 7, wobei die Auslösesignalisierung, die mittels C-RNTI verschlüsselt ist, einen neuen Ressourcen-Zuweisungsparameter umfasst; und

nach dem Umschalten, durch das Endgerät, eines aktuellen Uplink-Übertragungsmodus in den Zielübertragungsmodus das Verfahren ferner Folgendes umfasst:

Übertragen, durch das Endgerät, von Daten, basierend auf dem neuen Ressourcen-Zuweisungsparameter während einer letzten Datenübertragung.

9. Verfahren nach Anspruch 3, wobei nach dem Umschalten eines aktuellen Uplink-Übertragungsmodus in den Zielübertragungsmodus das Verfahren ferner Folgendes umfasst:
Freigeben, durch das Endgerät, des gespeicherten Funkressourcen-Zuweisungsparameters.

10. Verfahren nach einem der Ansprüche 1 bis 9, wobei nach dem Umschalten, durch das Endgerät, eines aktuellen Uplink-Übertragungsmodus in den Zielübertragungsmodus, wenn das Endgerät durch Abhören eine Auslösesignalisierung im voreingestellten Raum erkennt, das Verfahren ferner Folgendes umfasst:
Löschen, durch das Endgerät, eines HARQ-Puffers des Endgeräts.

11. Übertragungsmodus-Umschaltvorrichtung, umfassend:
ein Empfangsmodul (701) und ein Umschaltmodul (702), wobei die Vorrichtung das Verfahren nach einem der vorhergehenden Ansprüche ausführt.

**Revendications**

1. Procédé de commutation de mode de transmission, comprenant :

la réception (S201), par un terminal, des informations de configuration de mode de transmission envoyées par une station de base, les informations de configuration de mode de transmission comprenant un paramètre de configuration d'un mode de transmission cible ; et
la commutation (S202), par le terminal, d'un mode de transmission de liaison montante actuel vers le mode de transmission cible si le terminal détecte, par l'écoute, une signalisation de déclenchement dans un espace prédéfini ;
le mode de transmission cible étant un mode de transmission de demande de répétition automatique hybride asynchrone, HARQ, ou un mode de transmission de HARQ synchrone ;
lorsque le mode de transmission cible est le mode de transmission de HARQ asynchrone, la signalisation de déclenchement étant une information de commande de liaison descendante, DCI, qui comprend un identifiant de processus de HARQ et la commutation, par le terminal, d'un mode de transmission de liaison montante actuel vers le mode de transmission cible si le terminal détecte, par l'écoute, la signalisation de déclenchement dans un espace prédéfini comprenant :

si le terminal détecte, par l'écoute dans l'espace prédéfini, la DCI qui comprend l'identifiant de processus de HARQ, la commutation, par le terminal, du mode de transmission de liaison montante actuel vers le mode de transmission de HARQ asynchrone ;
lorsque le mode de transmission cible est le mode de transmission de HARQ synchrone, la signalisation de déclenchement étant une information de commande de liaison descendante DCI au format 0 ou DCI au format 4 et la commutation, par le terminal, d'un mode de transmission de liaison montante actuel vers le mode de transmission cible si le terminal détecte, par l'écoute, la signalisation de déclenchement dans l'espace prédéfini comprenant :
si le terminal détecte, par l'écoute, la DCI au format 0 ou la DCI au format 4 dans l'espace prédéfini, la commutation, par le terminal, du mode de transmission de liaison montante actuel vers le mode de transmission de HARQ synchrone.

2. Procédé selon la revendication 1, dans lequel la DCI qui comprend l'identifiant de processus de HARQ comprend un champ de schéma de modulation et de codage, MCS, à 5 bits, un champ de précodage à 3 ou 6 bits et un champ de numéro de processus de HARQ à 3 bits ; et
le champ de numéro de processus de HARQ est utilisé pour indiquer l'identifiant de processus de HARQ.

3. Procédé selon la revendication 1 ou 2, dans lequel avant la réception, par un terminal, d'informations de configuration de mode de transmission envoyées par une station de base, le procédé comprend en outre :

la réception, par le terminal, des informations de configuration d'ordonnancement semi-persistant, SPS, envoyées par la station de base, les informations de configuration de SPS comprenant un paramètre d'allocation de ressources radio ; et
le stockage, par le terminal, du paramètre d'allocation de ressources radio.

**4.** Procédé selon la revendication 3, dans lequel la DCI qui comprend l'identifiant de processus de HARQ comprend un champ de version à redondance, RV, à 2 bits et une valeur du champ de RV est utilisée pour indiquer si oui ou non la DCI qui comprend l'identifiant de processus de HARQ est une DCI valide.

**5.** Procédé selon la revendication 3, dans lequel la signalisation de déclenchement est une signalisation de déclenchement brouillée à l'aide d'un identifiant temporaire de réseau radio cellulaire, C-RNTI, de SPS.

**6.** Procédé selon la revendication 5, dans lequel la signalisation de déclenchement brouillée à l'aide du C-RNTI de SPS comprend un nouveau paramètre d'allocation de ressources ; et

après la commutation, par le terminal, d'un mode de transmission de liaison montante actuel vers le mode de transmission cible, le procédé comprend en outre :

la mise à jour, par le terminal, du paramètre d'allocation de ressources radio stocké vers le nouveau paramètre d'allocation de ressources.

**7.** Procédé selon la revendication 3, dans lequel la signalisation de déclenchement est une signalisation de déclenchement brouillée à l'aide d'un C-RNTI.

**8.** Procédé selon la revendication 7, dans lequel la signalisation de déclenchement brouillée à l'aide du C-RNTI comprend un nouveau paramètre d'allocation de ressources ; et

après la commutation, par le terminal, d'un mode de transmission de liaison montante actuel vers le mode de transmission cible, le procédé comprend en outre :

la transmission, par le terminal, des données basées sur le nouveau paramètre d'allocation de ressources lors d'une transmission de données la plus récente.

**9.** Procédé selon la revendication 3, dans lequel après la commutation d'un mode de transmission de liaison montante actuel au mode de transmission cible, le procédé comprend en outre :

la libération, par le terminal, du paramètre d'allocation de ressources radio stocké.

**10.** Procédé selon l'une quelconque des revendications 1 à 9, dans lequel après la commutation, par le terminal, d'un mode de transmission de liaison montante actuel vers le mode de transmission cible si le terminal détecte, par l'écoute, une signalisation de déclenchement dans un espace prédéfini, le procédé comprend en outre :

l'effacement, par le terminal, d'un tampon de HARQ du terminal.

**11.** Appareil de commutation de mode de transmission, comprenant :

un module de réception (701) et un module de commutation (702), l'appareil réalisant le procédé selon l'une quelconque des revendications précédentes.

01

02

FIG. 1

| | |
|---|---|
| A terminal receives transmission mode configuration information sent by a base station | S201 |
| If the terminal detects, through listening, trigger signaling in preset space, the terminal sets a current uplink transmission mode to a target transmission mode | S202 |

FIG. 2

Trigger signaling

t

FIG. 3

Trigger signaling

t

FIG. 4

A terminal receives transmission mode configuration information
sent by a base station — S201

If the terminal detects, through listening, trigger signaling in preset
space, the terminal sets a current uplink transmission mode to a
target transmission mode — S202

The terminal clears a HARQ buffer of the terminal — S203

FIG. 5

602    603

Processor    Interface
circuit

Bus

604

Memory

601

## FIG. 6

701    702

Receiving module    Switching module

## FIG. 7

701    702

Receiving module    Switching module

Storage module    801

## FIG. 8

701

702

| Receiving module | | Switching module |

801

901

| Storage module | | Updating module |

FIG. 9

701

702

| Receiving module | | Switching module |

801

110

| Storage module | | Transmission module |

FIG. 10

701

702

Receiving module

Switching module

801

111

Storage module

Releasing module

FIG. 11

701

702

120

Receiving module

Switching module

Clearing module

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016175007 A